# EUROPEAN PATENT SPECIFICATION

(11) **EP 2 932 736 B1**
(45) Date of publication and mention of the grant of the patent: **13.11.2019**
(21) Application number: 13821246.9
(22) Date of filing: 14.12.2013
(51) Int. Cl.: H04W 4/00, H04W 4/02

(54) **CONTACTLESS DIGITAL RIGHTS MANAGEMENT DATA TRANSFER SYSTEMS AND METHODS**
DATENÜBERTAGUNGSSYSTEME MIT KONTAKTLOSER DIGITALER RECHTEVERWALTUNG UND VERFAHREN
SYSTÈMES ET PROCÉDÉS DE TRANSFERT SANS CONTACT DE DONNÉES DE GESTION DES DROITS NUMÉRIQUES

(30) Priority: 14.12.2012 US 201261737432 P
(43) Date of publication of application: 21.10.2015
(73) Proprietor: Keyssa, Inc., Campbell, CA 95008 (US)
(72) Inventor: MCCORMACK, Gary, D., Campbell, CA 95008 (US); ISAAC, Roger, Campbell, CA 95008 (US)
(74) Representative: Boult Wade Tennant LLP
(86) International application number: PCT/US2013/075222
(87) International publication number: WO 2014/093958

(56) References cited:
- WO-A1-2012/154550
- US-A1- 2009 089 459
- US-A1- 2010 159 829
- US-A1- 2010 203 833
- US-A1- 2010 203 833
- US-A1- 2012 265 596
- US-B2- 8 131 645

## Description

This application claims priority to U.S. Provisional Patent Application Serial No. 61/737,432, filed December 14, 2012 and entitled "EHF-ENABLED MEDIA TRANSACTION".

This application is also a continuation-in-part of U.S. Patent Application Serial No. 13/848,735, filed March 22, 2013 and entitled "Contactless Data Transfer Systems and Methods", which application claims priority to the following: (1) U.S. Provisional Patent Application Serial No. 61 /799,510 filed March 15, 2013; (2) U.S. Provisional Patent Application Serial No. 61 /786,522 filed March 15, 2013; (3) U.S. Provisional Patent Application Serial No. 61 /737,432 filed December 14, 2012.

U.S. Patent Application Serial No. 13/848,735 is also a continuation-in- part of the following: (1) U.S. Patent Application Serial No. 13/760,089 filed February 6, 2013, which claims priority from U.S. Provisional Patent Application Serial No. 61 /661 ,756 filed June 19, 2012; (2) U.S. Patent Application Serial No. 13/427,576 filed March 22, 2012, which claims priority from U.S. Provisional Patent Application Serial No. 61/467,334 filed March 24, 201 1 ; (3) U.S. Patent Application Serial No. 12/655,041 filed December 21 , 2009, which claims priority from U.S. Provisional Patent Application Serial No. 61 /203,702 filed December 23, 2008; (4) U.S. Patent Application Serial No. 13/541 ,543 filed July 3, 2012; (5) U.S. Patent Application Serial No. 13/524,956 filed June 15, 2012, which claims priority from U.S. Provisional Patent Application Serial No. 61/497,192 filed June 15, 201 1 ; (6) U.S. Patent Application Serial No. 13/713,564 filed December 13, 2012, which claims priority from U.S. Provisional Patent Application Serial No. 61 /570,707 filed December 14, 2011 ; and (7) U.S. Patent Application Serial No. 13/776,727 filed February 26 2013.

### Technical Field

This disclosure relates to data transfer systems and methods. More particularly, this disclosure relates to systems and methods for digital media transactions using an Extremely High Frequency (EHF) communication link.

### Background

It is often important to transfer data between electronic devices. The data may comprise a media file (such as an image file, an audio file, a video file), DRM (digital rights management) protected content, an OS (operating system) update, customer specific code, OEM (original equipment manufacturer) specific code, retail specific code, a firmware image for the destination device, user data, encryption/decryption keys (codes), electronic funds transfer (EFT) data, static data and the like. The data may be transferred from a "source" (or sending) device such as a digital camera to a "destination" (or receiving) device such as a laptop. In some cases, data may also be transferred in the reverse direction, with the "destination" device serving as the source of the data, and the "source" device serving as the destination for the data. The transfer of data may occur via a communications link such as a cabled connection (such as USB), or via a wireless connection (such as Bluetooth). In the case of DRM or other access-controlled content, separate authorization (codes) may be required for using the data on the destination device.

Some examples of electronic devices which may be involved in the transfer of data include cell phones (or handsets, or smart phones), computers, laptops, tablets, or comparable electronic device Such electronic devices typically include a "host processor" (or microprocessor or simply "processor", or microcontroller, or "µC"), and resources (memory or storage) for storing data (any of which may be referred to simply as "storage").

In the main hereinafter, point-to-point connection-oriented techniques for data transfer between two electronic devices will be discussed. Generally, in order for the data transfer (which may be referred to as "uploading" or "downloading") to occur, both devices need to have compatible software installed so that they can have access to one another. During the data transfer, the devices need to be turned ON (operating), consequently system resources are consumed and for battery-operated devices, remaining (available) battery power diminishes.

An illustrative example of a point-to-point, connection-oriented communications link for transferring data between electronic devices is Near Field Communication (NFC). NFC implements a set of standards for smartphones and similar devices to establish radio frequency (RF) communication with each other by touching ("bumping") them together or bringing them into close proximity with one another. Present and anticipated applications include contactless transactions, data exchange, and simplified setup of more complex communications such as Wi- Fi. Communication is also possible between an NFC-enabled device and an unpowered NFC chip, called a "tag", which may harvest its operating power from the NFC-enabled device.

When transferring data between electronic devices, it is generally necessary that the devices' host processor(s) become involved and that data is transferred under its (or their) direction and control. When a data connection is made, the host processor is typically notified, then may authenticate the connection, and if there is a data transfer to be made, the host processor allocates memory for the data (or identifies the data that will be transferred) and then directs the action. At the end of the transfer, the host processor then validates the transaction. This process requires that the host processor be aware of and direct the transaction. This method of transferring data between electronic devices may create a number of problems, such as:
- the host processor must be ON (powered up) for the data transfer to take place;
- the host processor must be configured for the data transfer to take place;
- the overall system power consumption is higher than if the host processor were not involved;
- the data may be malicious code and may cause problems if being handled by the host processor
- the transfer time for the data, using NFC or other existing wireless technologies, may be very long

In US2010/0203833, systems are provided that support millimeter-wave wireless communications between hosts and electronic devices. A host may be formed using a personal computer associated with a user or computing equipment associated with a public establishment. Content can be automatically synchronized between the host and the user's electronic device over a millimeter-wave wireless communications link in a communications band such as a 60 GHz wireless communications band. Synchronization operations may be performed based on user content preferences. Content preference information may be gathered explicitly from a user using on-screen options or may be gathered by monitoring user media playback activities and media rating activities. The content preference information may be transmitted automatically from an electronic device to a host when the electronic device is brought within range of the host. Synchronization operations may be performed automatically when a user is in proximity of a point-of-sale terminal or ticketing equipment.

### Summary

According to the present invention, there is provided a method in accordance with appended claim 1.

Embodiments described herein may relate to industrial and commercial industries, such as electronics and communications industries using devices that communicate with other devices or devices having communication between components in the devices. Other objects, features and advantages of the embodiments disclosed herein may become more readily appreciated in light of the following illustrations and descriptions thereof.

### Brief Description of the Drawings

Reference will be made in detail to embodiments of the disclosure, non-limiting examples of which may be illustrated in the accompanying drawings. The drawings may be in the form of diagrams. Some elements in the drawings may be exaggerated or drawn not-to-scale; others may be omitted, for illustrative clarity. Any text (legends, notes, reference numerals and the like) appearing on the drawings are incorporated by reference herein. When terms such as "left" and "right", "top" and "bottom", "upper" and "lower", "inner" and "outer", or similar terms are used in the description, they may be used to guide the reader to orientations of elements in the drawings, but should be understood not to limit the apparatus being described to any particular configuration or orientation, unless otherwise specified or evident from context. Different "versions" of elements may be referenced by reference numerals having the same numbers (###) followed by a different letter suffix (such as "A", "B", "C", or the like), in which case the similar elements may be inclusively referred to by the numeric portion (###) only of the reference numeral.
Figs. 1A, 1B, 1C are diagrams illustrating an exemplary data transfer system, and steps of an exemplary data transfer between two electronic devices.
Fig. 2 is a flowchart illustrating some methods of operation for the data transfer system and devices thereof.
Figs. 3A, 3B and 3C are diagrams of some use scenarios (deployments) for devices using the data transfer techniques disclosed herein.
Figs. 4A, 4B and 4C are diagrams illustrating some techniques for shielding data transfer between two devices.
Fig. 5 is a block diagram illustrating a system, according to aspects of the present disclosure.
Figs. 6A, 6B and 6C illustrate a process of transmitting a file from a first smartphone to a second smartphone to generate a first tiled display.
Fig. 6D illustrates the first smartphone transmitting the file to the second smartphone and one or more additional smartphones to generate a second tiled display.
Fig. 7 is a flowchart illustrating a method for transmitting one or more files from a first electronic device to a second electronic device.
Fig. 8 is a flowchart illustrating a method of synchronizing a digital media file from a first electronic device to a second electronic device.

### Detailed Description

Various embodiments may be described to illustrate teachings of the invention(s), and should be construed as illustrative rather than limiting. It should be understood that it is not intended to limit the invention(s) to these particular embodiments. It should be understood that some individual features of various embodiments may be combined in different ways than shown, with one another.

The embodiments and aspects thereof may be described and illustrated in conjunction with systems, devices and methods which are meant to be exemplary and illustrative, not limiting in scope. Specific configurations and details may be set forth in order to provide an understanding of the invention(s).

However, it should be apparent to one skilled in the art that the invention(s) may be practiced without some of the specific details being presented herein. Furthermore, some well-known steps or components may be described only generally, or even omitted, for the sake of illustrative clarity.

Reference herein to "one embodiment", "an embodiment", or similar formulations, may mean that a particular feature, structure, operation, or characteristic described in connection with the embodiment, is included in at least one embodiment of the present invention. Thus, the appearances of such phrases or formulations herein are not necessarily all referring to the same embodiment. Furthermore, various particular features, structures, operations, or characteristics may be combined in any suitable manner in one or more embodiments.

In the following descriptions, some specific details may be set forth in order to provide an understanding of the invention(s) disclosed herein. It should be apparent to those skilled in the art that these invention(s) may be practiced without these specific details. Headings (typically underlined) may be provided as an aid to the reader, and should not be construed as limiting.

### Some Terminology

The following terms may be used in the descriptions set forth herein, and should be given their ordinary meanings unless otherwise explicitly stated or as may be evident from context.

The acronym "EHF" stands for Extremely High Frequency, and refers to a portion of the electromagnetic (EM) spectrum in the range of about 30 GHz to about 300 GHz (gigahertz).

The term "transceiver" (abbreviated "XCVR", or "Tx/Rx") may refer to a device such as an IC (integrated circuit) including a transmitter ("Tx") and a receiver ("Rx") so that that the integrated circuit may be used to both transmit and receive information (data). Generally, a transceiver may be operable in a half-duplex mode (alternating between transmitting and receiving), a full duplex mode (transmitting and receiving simultaneously), or configured as either a transmitter or a receiver. A transceiver may include separate integrated circuits for the transmit and the receive functions.

The term "contactless", as used herein, refers to implementing electromagnetic (EM) rather than electrical (wired, contact-based) connections and transport of signals between entities (such as devices). In some of the literature, the term "wireless" is used to convey this meaning. As used herein, the term "contactless" may refer to a carrier-assisted, dielectric coupling system which may have an optimal range in the zero to five centimetre range. The connection may be validated by proximity of one device to a second device. Multiple contactless transmitters and receivers may occupy a small volume of space. A contactless link established with electromagnetics (EM) may be point-to-point in contrast with a wireless link which typically broadcasts to several points.

The terms, chip, die, integrated circuit (IC), semiconductor device, and microelectronic device, are often used interchangeably, in common usage, and may be used interchangeably herein. This also may include bare chips (or dies), packaged chips (or dies), and chip modules and packages. The techniques disclosed herein may be implemented with integrated circuits (ICs) using standard CMOS (Complementary-Metal-Oxide-Semiconductor) processes. Some functions described as being implemented by chips may be implemented as macro-functions incorporated into application specific integrated circuits (ASICS) and the like, and may alternatively be implemented, at least partially, by software running on a microcontroller. With respect to chips, various signals may be coupled between them and other circuit elements via physical, electrically-conductive connections. Such a point of connection is may be referred to as an input, output, input/output (I/O), terminal, line, pin, pad, port, interface, or similar variants and combinations.

### Connector-Replacement Chips

US20100159829 (the '829 publication) discloses tightly-coupled near-field communication-link devices, referred to therein as "connector-replacement chips". Tightly-coupled near-field transmitter/receiver pairs are deployed such that the transmitter is disposed at a terminal portion of a first conduction path, the receiver is disposed at a terminal portion of a second conduction path, the transmitter and receiver are disposed in close proximity to each other, and the first conduction path and the second conduction path are discontiguous with respect to each other. In this manner, methods and apparatus are provided for transferring data through a physically discontiguous signal conduction path without the physical size and signal degradation introduced by a signal-carrying mechanical connector, and associated cabling. The '829 publication references US 5,621,913 and shows (FIG. 12 therein) a high-level block diagram of the transmit path of a nearfield transmitter, and further shows (FIG. 13 therein) a high-level block diagram of the receive path of a near-field receiver.

US20120263244 (the '244 publication) discloses integrated circuits with electromagnetic communication. A system for transmitting or receiving signals may include an integrated circuit (IC), a transducer operatively coupled to the IC for converting between electrical signals and electromagnetic signals; and insulating material that fixes the locations of the transducer and IC in spaced relationship relative to each other. The system may further include a lead frame providing external connections to conductors on the IC. An electromagnetic-energy directing assembly may be mounted relative to the transducer for directing electromagnetic energy in a region including the transducer and in a direction away from the IC. The directing assembly may include the lead frame, a printed circuit board ground plane, or external conductive elements spaced from the transducer. In a receiver, a signal detector circuit may be responsive to a monitor signal representative of a received first radiofrequency electrical signal for generating a control signal that enables or disables an output from the receiver.

U.S. Patent Application Serial No. 13/713,564, discloses connectors providing haptic feedback. As mentioned therein, it is important to provide improved signal security and integrity when communicating between any two EHF communication devices (or units). One method for enhancing or ensuring proper signal security and integrity is to verify that a second EHF communication unit is within a predetermined range before or during a communication attempt with a first EHF communication unit. To that end, systems and methods for detecting the presence of the second EHF communication unit and/or for ensuring another device or surface is within a certain distance may be included. Examples of such systems and methods are described in US20120319496.

US20120319496 (the '496 publication) discloses a system for sensing proximity using EHF signals that may include a communication circuit configured to transmit via a transducer an EM signal at an EHF frequency, and a proximity sensing circuit configured to sense a nearby transducer field-modifying object by detecting characteristics of a signal within the communication circuit. Some exemplary proximity-sensing circuits are disclosed therein, and the proximity of a nearby object may be detected by a change in the effective impedance of an antenna caused by the nearby object.

US20120295539 (the '539 publication) discloses EHF communication with electrical isolation and with dielectric transmission medium. A communication system including two transceivers is disclosed therein. A transceiver operating in a transmit mode may include an amplifier that receives a transmit baseband signal and amplifies the signal for input to a modulator which may apply the baseband signal to an EHF carrier signal produced by an EHF oscillator to produce a transmit electrical EHF signal that is communicated to an antenna for transmission. When the transceiver is functioning in a receive mode, an EHF signal received by an antenna and converted to an electrical signal for input to a demodulator for producing a baseband signal. The communication system disclosed uses a modulated EHF carrier to couple signals across an air or dielectric medium. A very high data rate may be realized using this technique.

### Transferring Data between Electronic Devices

According to the present disclosure, generally, electronic devices (or simply "devices") may comprise a host system and an I/O (input/output) or communication subsystem. The host system may comprise a host processor and "primary" storage. The I/O subsystem may comprise a controller, "exchange" storage, and an RF (radio frequency) portion comprising at least one of a transmitter (Tx) or receiver (Rx), or at least one transceiver (Tx/Rx). The host processor may function as the communication subsystem controller. The primary and exchange storages may be different portions of one storage.

Data transfers between electronic devices may be implemented over a "contactless" radio frequency (RF) electromagnetic (EM) Extremely High Frequency (EHF) communications (or communication) link (interface), which may be handled substantially entirely by the communication subsystems of the devices involved in the data transfer. The EHF communication link may be established between a first RF portion (or first EHF communication unit) of a first electronic device, and a second RF portion (or second EHF communication unit) of a second electronic device.

Data to be transferred may be stored (temporarily) in an "exchange" storage of (or associated with) the communication subsystem of a source (sending) device, awaiting detection (by the source device) of a destination (receiving) device. The host system of the sending device may be OFF, or in a low-power mode. Upon detection of a destination device, a communications link may be established and the data may be transferred to an "exchange" storage of the communication subsystem of the destination (receiving) device where it may be stored (temporarily). The host system of the receiving device may be OFF, or in a low-power mode.

Data in the exchange storages of the sending and receiving devices may be firewalled, to protect the host system from malicious code in the data being transferred. The communication subsystem of the receiving device may notify the host system of the receiving device (and may also notify the communication subsystem of the sending device) when the data transfer operation is complete. When the receiving device is turned ON, data from its "exchange" storage may be moved (or copied) to its primary storage. Data may be also transferred in a similar manner from the receiving device to the sending device.

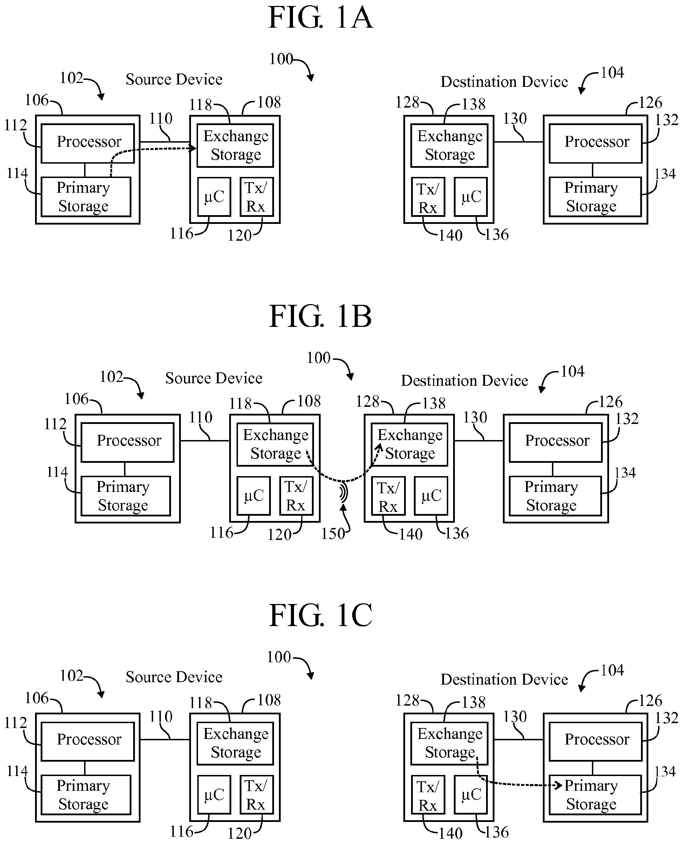

Figs. 1A, 1B and 1C illustrate an exemplary data transfer system 100, and some steps which may be implemented to effect a method of transferring data between two (or more) electronic devices ("devices"). Data may be transferred in at least one direction, from a first device 102 which may be regarded as a source for sending the data to be transferred, to a second device 104 which may be regarded as a destination for receiving the data which is transferred.

In the main hereinafter, the transfer of data from the first device 102 to the second device 104 will be described. Generally, the first device 102 initiates the data transfer after detecting the second device 104, and the second device 104 may notify the first device 102 that it is ready to receive the data transfer. The second device 104 may also notify the first device 102 of successful receipt of the data being transferred. Data may alternatively or additionally be transferred from the second device 104 (acting as a source for sending the data) to the first device 102 (acting as a destination for receiving the data).

The first device 102 may comprise a host system (or portion) 106 and a communication subsystem (or portion) 108. The host system 106 may communicate with the communication subsystem 108 over a signal line (or bus) 110.

The host system 106 may comprise a processor 112 such as SOC (system on chip), and a "primary" storage 114 such as DRAM or flash memory.

The communication subsystem 108 may comprise a microcontroller (µC) 116, and an "exchange" storage 118 such as DRAM or flash memory. The communication subsystem 108 further comprises at least one of a transmitter (Tx) or a receiver (Rx), or at least one transceiver (Tx/Rx) 120.

The host processor 112 may function as the communication subsystem microcontroller (µC) 116, the primary storage 114 and the exchange storage 118 may be different portions of one storage medium, such as DRAM or flash memory.

The second device 104 may comprise a host system (or portion) 126 and a communication subsystem (or portion) 128. The host system 126 may communicate with the communication subsystem 128 over a signal line (or bus) 130.

The host system 126 may comprise a processor 132 such as SOC (system on chip), and a "primary" storage 134 such as DRAM or flash memory.

The communication subsystem 128 may comprise a microcontroller (µC) 136, and an "exchange" storage 138 such as DRAM or flash memory. The communication subsystem 128 further comprises at least one of a transmitter (Tx) or a receiver (Rx), or at least one transceiver (Tx/Rx) 140.

The host processor 132 may function as the communication subsystem microcontroller (µC) 136. The primary storage 134 and the exchange storage 138 may be different portions of one storage medium, such as DRAM or flash memory.

The transceivers 120 and 140 are examples of means for communicating EHF signals contactlessly between the first device 102 and the second device 104, respectively and for converting between EHF signals and digital electrical signals. The transceivers 120, 140 may each be a half-duplex transceiver which can asynchronously convert a baseband signal into a modulated EHF (extremely high frequency) carrier at 30-300 GHz, or higher, such as 60GHz carrier frequency, which is radiated from an internal or external antenna (not shown), or can receive and demodulate the carrier and reproduce the original baseband signal.

RF energy output by communication subsystems 108 and 128 may be below FCC requirements for certification or for transmitting an identification (ID) code which would otherwise interrupt data flow during the data transfer. Reference is made to 47 CFR §15.255 (Operation within the band 57-64 GHz).

The transceivers 120 and 140 may be implemented as IC chips comprising a transmitter (Tx), a receiver (Rx) and related components. The transceiver chip(s) may be packaged in a conventional manner, such as in BGA (ball grid array) format. The antenna may be integrated into the package, or may be external to the package, or may be incorporated onto the chip itself (such as in the manner of US 6373447).

Antennas associated with the transceivers are omitted, for illustrative clarity (they are discussed in detail in the '829 and '244 publications). An exemplary communication subsystem 108, 128 may comprise one, two, or more transceiver chips. It should be understood that if only one-way communication is required, such as from the source device 102 to the destination device 104, the transceiver 120 could be replaced by a transmitter (Tx) and the transceiver 140 could be replaced by a receiver (Rx).

Transmit power and receive sensitivity for the transceivers 120 and 140 may be controlled to minimize EMI (electromagnetic interference) effects and simplify FCC certification. The EHF carrier may penetrate a wide variety of commonly-used non-conductive materials (glass, plastic, etc.). Some features or characteristics of the transceivers 120, 140 may include:
- Low latency signal path
- Multi-Gigabit data rates
- Link detection and link training

The signals transmitted by the transceivers 120 and 140 may be modulated in any suitable manner to convey the data being transferred from one device to the other device, some nonlimiting examples of which are presented herein. Modulation may be OOK (on/off keying) or other similar simple modulation techniques. Signals may be encoded and packetized and transmitted by one transceiver (such as 120), and received and unpacketized and decoded by another transceiver (such as 140). Out-of-band (OOB) signaling or other suitable techniques may be used to convey information other than or related to the data being transferred between the two devices.

Fig. 1A illustrates that, in preparation for a data transfer session, the first (sending, source) device 102 may pre-load data stored in its primary storage 114 into the exchange storage 118 of its communication subsystem 108. This is illustrated by the dashed-line arrow extending from the primary storage 114 to the exchange storage 118, and may occur in advance of any communication session so that the data is ready to be transferred "at a moment's notice". Alternatively, moving data from the primary storage 114 to the exchange storage 118 may occur after a partner device (104) is detected and a data transfer session is about to begin. The exchange storage 118 may be a partitioned part of the primary storage 114.

Fig. 1B illustrates the first device 102 (which is nominally the source/ sending partner or device) device 102 having been brought into proximity with the second device 104 (which is nominally the destination/receiving partner or device). The proximity of the second device 104 with the first device 102 may be detected, by any suitable means, some of which have been described hereinabove, others of which are described herein below. Then, the data may be transferred from the first device 102 to the second device 104. More particularly, data stored in the exchange storage 118 of the communication subsystem 108 of the source device 102 may be transferred to the exchange storage 138 of the communication subsystem 128 of the destination device 104, as indicated by the dashed-line arrow extending between the exchange storages 118 and 138. In the main, hereinafter, data flow from the device 102 to the device 104 may be described, as representative of data flow in either direction (i.e., including data flow from the device 104 to the device 102).

Data transfer between the two electronic devices 102, 104 may be implemented over a "contactless" radio frequency (RF) electromagnetic (EM) communications link (interface) 150, which is handled substantially entirely by the communication subsystems 108, 128 of the first and second devices 102, 104, respectively. Signals flowing between the devices 102 and 104 occur electromagnetically over a non-electrical (dielectric) medium such as an air gap, waveguide, or plastics (polyethylene, thermoplastic polymers, polyvinylidene difluoride, fluoropolymers, ABS, and other plastics), including combinations of these materials. The EHF signal can pass through other dielectric materials such as cardboard. The EHF signal can pass through a series of different dielectric materials and/or waveguides.

Due to the high data rate enabled by the EHF contactless communication, large data files, such as movies, audio, device images, operating systems, and the like may be transferred in very short periods of time in contrast with existing technologies such as NFC. As an example, a 1 Gigabyte data file may be transferred in as little as 5 seconds.

The electromagnetic communication may typically be over an air gap, and therefore may be limited to a short range, such as 0-5cm. A dielectric medium such as a dielectric coupler 370, described in greater detail herein below, may be used to extend the range of the contactless link between the devices 102 and 104 to several centimeters (cm), meters, or more.

It should be understood that in this, and any other embodiments of contactless links discussed herein, an overall communications system may be implemented as a combination of contactless and physical links. Furthermore, some of the techniques described herein may be applied to transferring data over a physical link, such as a cable and connectors. In the main, hereinafter, the use of a contactless link for transferring data between the two devices will be described. FIG. 1C illustrates that, after completion of the data transfer session, the second (receiving, destination) device 104 no longer needs to be in proximity with the first (sending, source) device 102, and may move the transferred data stored in its exchange storage 138 of its communication subsystem 128 into its primary storage 134. This is illustrated by the dashed-line arrow extending from the exchange storage 138 to the primary storage 134, and may occur at any time after completion of the data transfer. The receiving device 104 may verify the data which has been received, may alert its host processor 132 that the data has been received (alternatively the host processor 132 may perform the verification), and may send a signal back to the sending device 102 that the data has successfully been transferred. The exchange storage 138 may be a partitioned part of the primary storage 134.

In an exemplary use scenario, data to be transferred from a sending device 102 may be stored in the primary storage 114 of the sending device 102, and the host system 106 (or processor 112) of the sending device 102 may be OFF (powered down or in a low power state). The communication subsystem 108 of the sending device 102 may be ON, and when a receiving device 104 is detected, the host system 106 (or processor 112) of the sending device 102 may be turned ON to move the data to be transferred from the primary storage 114 to the exchange storage 118 of the sending device 102. This movement of data to be transferred from the primary storage 114 to the exchange storage 118 may only need to be done once, then updated as may be required, such as incrementally. Or, it can be done every time data is being transferred from the sending device 102 to the receiving device 104. In some cases, different data packages may be transferred by the sending device 102 to a given one of or various different receiving device(s) 104, in which case only the selected data package need be moved to the exchange storage 118 for the data transfer. In some cases, the data may not be moved from the primary storage 114 to the exchange storage 118 on the sending device 102 and the data may be transferred directly to the receiving device 104 from the primary storage 114. In some cases, the sending or receiving devices 102 and 104 may not have any exchange storages 118 and 138, respectively, all storage being performed by the primary storages 114 and 134, respectively.

In cases where data will be transferred in one direction only, from the sending device 102 to the receiving device 104, the exchange storage 118 may be eliminated. It may be beneficial, however, that the sending device 102 architecture mirror that of the receiving device 104, and include the exchange storage 118, for cases where the sending device 102 receives data from the receiving device 104.

When the communication subsystem 108 of the sending device detects a receiving device 104, a link may be established between the sending device 102 and the receiving device 104 and the transfer of data from the sending device 102 to the receiving device 104 may be initiated. The host system 126 (or processor 132) of the receiving device may be OFF (powered down or in a low power state), and the communication subsystem 128 of the receiving device 104 may be ON or in a low-power state and circuitry for detecting a connection may be periodically enabled. The data which is received by the communication subsystem 128 of the receiving device may be stored in the exchange storage 138 of the receiving device 104. The communication subsystem 128 may verify the data, and may alert the host system 126 (or processor 132) that the data has been received, and the host system 126 (or processor 132) may verify the transferred data. The communication subsystem 128 of the receiving device 104 may also alert the sending device 102, via its communication subsystem 108, that the data has successfully been received.

Data in the exchange storages 108 and 138 of the sending and receiving devices 102 and 104, respectively, may be firewalled, to protect the host systems 106 and 126 from malicious code in the data being transferred. When the receiving device 104 (or communication subsystem 128 of receiving device 104) is turned ON, data from its "exchange" storage 138 may be moved (or copied) to its primary storage 134. Data may be also transferred in a similar manner from the receiving device 104 to the sending device 102.

### Link Discovery

The process of the first device 102 (notably its communication subsystem 108) detecting the second device 104 (notably its communication subsystem 128) and establishing the contactless link 150 may be referred to generally as "link discovery".

In point-to-point wireless (contactless) systems, it is necessary to determine when to initiate a link between two devices. In traditional connector-based systems, the link establishment can be determined based on measuring some electrical characteristics that change when a connector is plugged in and a link between two devices may be established. In a point-to-point contactless system, an electrical detection method may not be possible.

The transceivers 120, 140 may be enabled to detect a link partner while dissipating minimal power. Link discovery may be implemented by the sending device 102 (more particularly, the transmitter Tx portion of the transceiver 120) transmitting a beacon signal, periodically, for a short duration of time, instead of being enabled continuously. Likewise, the receiving device 104 (more particularly, the receiver Rx portion of the transceiver 140) may be enabled to listen for the beacon, periodically, for a short duration of time, instead of being enabled continuously. A ratio of the transmit and receive durations of time can be established to ensure periodic overlap - i.e., that the receiver will be activated to detect the beacon within a reasonable number of periods. If a transmitter beacon is within an appropriate range to establish a link, the transmitter's beacon will be picked up by an active receiver. This periodic beaconing and listening approach allows for conservation of power (and extended battery life). Some techniques for link detection, including beaconing and enumeration, and switching from reduced-power to full-power operation, are disclosed in the aforementioned US 61799510 filed 15 Mar 2013.

### Electrostatic Shielding

Because they are communicating with one another strictly by RF, contactlessly, a given device 102 or 104 (or both) may (each) be enclosed in a non-conducting barrier (housing, enclosure, or the like, not shown), such as of plastic or acrylic. Electromagnetic (EM) radiation may pass easily through the barrier, but electrical current cannot pass easily through the barrier. The barrier can therefore isolate circuit board and fragile chips from ESD (electrostatic discharge). The barrier may also hermetically seal the device(s). The barrier may additionally provide a benefit to device(s) such as cell phones, for example protecting them from moisture and humidity. The electromagnetic interface (EM) techniques disclosed herein may completely eliminate the need for any mechanical connectors (other than, perhaps a jack for recharging an internal battery) or other openings in the device.

### Method(s) of Operation

The technique(s) presented herein solve(s) the problem of transmitting data between two (or more) electronic devices - one of which may be considered to be a sending device, the other of which may be considered to be a receiving device - without intervention by one or both of the devices' host processor(s) by providing one or both of the electronic devices with a communication (I/O) subsystem that can detect and set up a communication link (such as a contactless link) with the other device, control the transfer of data from the sending device to the receiving device without intervention from the host processor(s) in one or both of the devices, and that can maintain or direct the data to be transferred or being received in a secure area of the device's memory or a physically separate memory ("exchange storage") which may be isolated (such as firewalled) from the device's main memory ("primary storage"). This provides protection against malicious code in the data being transferred, and also allows a device to participate in the communication session without its main processor being turned ON.

The communication subsystem of the receiving device then may validate the data transfer (transaction) itself or notify the host processor in the receiving device that the data has been transferred into the exchange storage. In the latter case, the host processor of the receiving device then may validate the transaction and transfer the data from the exchange storage to the primary storage.

In one example of data which is transferred, the primary storage may comprise a user area of memory, and the user may then have access to the data which has been transferred, for example a media file (such as pictures, video, music, etc.).

In another example, the data being transferred may be an operating system (OS) update or code update to the operating system of the receiving device, or other critical code. Once the data has been transferred into the exchange storage, the data may then be validated by the communication subsystem itself or other secure portion of the receiving device. Once validated, the transferred data may be moved securely from the exchange storage to the device's primary storage, to replace or update the OS or other critical code in the system. In this manner, the data being transferred may be able to update the system while the host processor is OFF (powered down) or in a low power state.

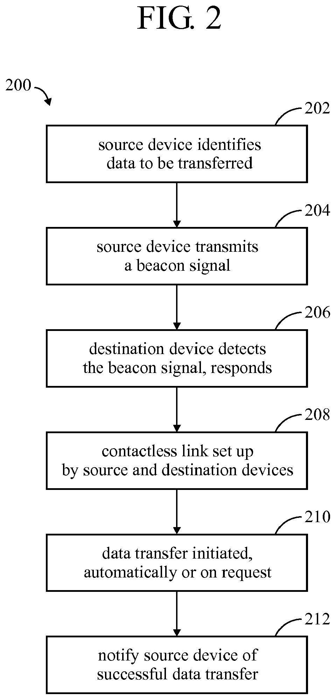

Fig. 2 is a flowchart of a generalized exemplary overall method 200 of transferring data between two electronic devices - one of which may be considered to be a sending (source) device, the other of which may be considered to be a receiving (destination) device - presenting some of the concepts discussed and described above. A high-speed contactless link may be established between communication I/O subsystems of the devices which may operate without intervention from the host processors of the devices, and the data may be stored in a secure area of memory ("exchange storage") of the receiving device, and optionally also in an exchange storage of the sending device. The method 200 may be described in a number of steps. In some cases, steps which are described are optional, and can be omitted. In other cases, the order in which the steps are presented may be changed.

In a first step 202, the source device (102) may identify the data to be transferred. Recall that either of two devices which will be involved in a data transfer may be considered to be the source (or sending) device (102) with the other device being considered to be the destination (or receiving) device (104), and that communication may occur in both directions between the devices rather than only in one direction. Hence, for example, although in this step it is stated that the source device (102) identifies data to be transmitted, at some point during the communication session, including before initiating the communication session, the destination device (104) may also identify data that will be transferred to the source device (102).

In a next step 204, the source device (102) may transmit a beacon signal to enable discovering a destination device (104).

In a next step 206, the destination device (104) detects the beacon signal and may optionally respond thereto, such as by turning on its own beacon. In a next step 208, the contactless link (150) is set up by the source device (102) and the destination device (104). This setup process occurs very quickly, and the data transfer session is ready to commence. Typically, only one destination device (104) will be involved with a single source device (104), but the possibility of having one source device (102) transmitting (transferring) data to more than one destination device (104), in a "broadcast" mode, using index markers in the data stream, is discussed below.

In a next step 210, data is transferred from the source device (102) to the destination device (104). The data transfer may be initiated either automatically (based on link detection) or upon request (such as the destination device's microcontroller 136 or host processor 132 indicating that it is ready for the data transfer to commence, or to resume a previous data transfer which was interrupted). Optionally, other data may also be transferred from the destination device (104) to the source device (102), automatically or on request.

The source device (102) may start sending data when a destination device is detected and a communication link is established. Or, the source device may send data continuously, in a "broadcast" mode to be received by one or more destination devices (104). In either case (sending on demand or continuously), the source device (102) may embed index markers in a data stream such as at the beginning of the data stream, at a number of intermediate points (such as at pre-determined intervals or other milestones) in the data stream, and at the end of the data stream. In this manner, the destination device (104) can ascertain if it has started receiving data at the beginning of a data stream and, if not, at what part of the data stream it has commenced receiving the data, when the data transfer is complete. In this manner, if the destination device (104) has started receiving a data stream at an intermediate point, it has the option of accepting (commencing receiving and storing) the transfer of only a latter portion of the data stream (partial file transfer), then receiving a beginning portion of the data stream when the source device (102) loops (restarts) the entire transmission, thereafter receiving the missing beginning portion of the data stream. Or, the destination device (104) may accept only the partial file transfer, without further action. This approach allows for fully passive (receive-only) transmission of data, such as may be useful for kiosking data to anonymous devices.

Another technique which may be implemented during the transmission (transfer) of data from the source device (102) to the destination device (104), which may involve transmission in the reverse direction (as suggested above) may include the source device (102) pausing (skipping) transmission of a data stream at periodic intervals, and allowing the destination device (104) to transmit "skip fills" (data) back to the source device during the skipped periods. The "skip fills" by the destination device (104) may be an on-the-fly encryption code generated and transmitted by the destination device (104) that the source device (102) receives and uses to scramble the data being transferred (transmitted), or can allow for masking the transmission with random (or watermarked) data transmitted by the destination device (104). In the case of "snooping" (unauthorized devices intercepting the data transfer), these methods may render the snooped transmissions very difficult to crack (decode), as the snooping device would not readily be able to ascertain which of the source or destination devices is transmitting at any given moment - the intercepted alternating transmissions by both source and destination devices may appear to the snooping device to be one contiguous, undecipherable transmission.

Further security (against snooping) for full-duplex transmission (transfer) of data between devices (102, 104) may be provided by causing both devices to transmit concurrently during a data transfer. The device which is nominally the receiving device can transmit random signals, decryption codes, or other data, which may obscure the transmission of data from the device which is nominally the sending device. One or both transmitting device(s) may implement spread spectrum clocking (SSC) which may further hinder snooping.

In a next step 212, the destination device (104) may notify the source device (102) that the data transfer has been successfully received. If the "success" notification is not received by the source device (102), or if a "fail" notification is sent by the destination device (104), the source device (102) may re-send the data, or portions thereof. Optionally, upon completion of the data transfer, the host processor (132) of the destination device may also be notified.

The data which is received may first be stored in exchange storage (138) of the destination device (104), and may subsequently be moved to the primary storage (134) of the destination device (104). Or, the data which is received may be remain in the exchange storage (138) without being moved to the primary storage (134). The data which is received may be validated, either by the communication subsystem (128) or by the host system (126). Or, the data which is received may be used "as is", without validation.

The transmitters (Tx) and receivers (Rx), or transceivers (Tx/Rx) 120 and 140, which may be implemented as chips, may be factory-serialized, so that the chips and their transmissions may be 'tagged' (fingerprinted), which may enable a later forensic analysis to be performed for digital rights management (DRM). For example, protected (premium) content could be freely (unimpeded) transferred from one device to another, but the transaction could be traced to the specific devices involved, so that the participants in the transaction can be held accountable (such as, billed).

### Some Exemplary Deployments

Some exemplary use scenarios (deployments) for the data techniques disclosed herein will now be described, generally in the context of only two electronic devices - one of which may be considered to be a sending (source) device, the other of which may be considered to be a receiving (destination) device, generally as described above. A single source device (102) may transmit (transfer) data to a plurality of destination devices (104), either one at a time or many at once. And, in addition to the source device transmitting data to the destination device(s), the destination device(s) can transmit data to the source device.

In the deployments described herein, or in other deployments which are not specifically described herein, one or more of the following features, and the like, and extensions thereof may be realized:
- the data transfer ("contactless programming") may occur at high speed. The host processor(s) in the destination device(s) being programmed may be OFF, or in a low power mode ("asleep")
- the data which is transferred may be validated by connection
- the data which is transferred may be stored in secure (exchange) memory
- destination device(s) can be tested and their status(es) read
- OEM specific code may be loaded into the destination device(s)
- applications and content may be loaded into the destination device(s)
- the source device(s) may or may not already be in packaging (such as sealed boxes)
- there could be different versions of software / OS for different customers or different vendors

In an exemplary scenario ("Factory Programming"), a first device (102), such as a mobile handset, which is considered to be the receiving (destination) device for the data being transferred, is programmed at the factory, by a second device such as a factory programming device ("programmer"), which is considered to be the sending (source) device. By utilizing a contactless link, as described above, no physical connections are required between the device to be programmed and the device ("factory programmer") transferring the data, such as by placing the device to be programmed on a landing pad (or dock) associated with the factory programmer. This can greatly simplify the data transfer process, and increase throughput.

For example, the data being transferred from the sending device to the receiving device may comprise an operating system (OS) or firmware for the receiving device. Alternatively, or additionally, during factory programming, the second device may be tested, and its status read by the programmer, providing a level of quality assurance (QA) at the manufacturing stage.

In another exemplary scenario ("Warehouse Programming"), features similar to Factory Programming may be implemented. For example, a warehouse having a large inventory of mobile phones may accept orders from customers and personalize the products for the ordering party (such as a given cell phone provider), via contactless communication and data transfer, without opening the box in which the product is packaged. This could apply, as well to online vendors (or the like) who can accept orders from individual end-users, and pre-load the product with personalized items (operating system, software applications, and the like), again contactlessly, without requiring opening the box. Quality assurance (QA), and some of the other features described above may be implanted during Warehouse Programming.

The Factory Programming and Warehouse Programming scenarios are exemplary of situations where "generic" devices are in a box that should remain unopened, yet may be personalized for a given vendor or service provider, or with end-user preferences, including loading features on the device, customizing the devices' content, loading premium items on the device, setting permissions on the device, installing DRM keys on the device, setting country codes in the device, and the like, some of which personalization features may additionally or alternatively be performed at a point of sale (POS) vendor. Using the techniques disclosed herein, the data transfer can occur very quickly, and the host processor may be OFF (or in a low power state), both of which will result in very low power required for the transfer and consequent small amount of drain of the device's batteries (if any -- in some deployments, power for the destination device may be obtained by harvesting power from an external source).

In another exemplary scenario ("Point of Sale Programming"), features similar to Warehouse Programming may be implemented. While the device may be unboxed at the point of sale, the contactless programming may nevertheless be highly beneficial (e.g., contactless programming may be faster or may eliminate the possibility of damaging a connector on the device). More specifically, retailer or OEM specific content or applications (personalized content, purchased along with the device) could be loaded into the device. The device being sold to a customer can be personalized for the given customer and can be given a final (QA) check to activate the warranty. Typically, but not necessarily, in Point of Sale (POS) programming, the item is unboxed. Contactless data transfer eliminates the need to un-box the item.

In another exemplary scenario ("Kiosking"), devices which are already sold and in possession of an end user may receive data transfers from kiosks functioning as source devices for the data transfer. For example, content vending machines may transfer data selected by users to the users' devices (typically for a fee). Free content may also be distributed in this manner, such as "bonus" content associated with an event attended by the user, such as at movie theatres, by incorporating a source device into a movie poster or the like. Unlike QR (Quick Response) code applications which may require an Internet connection to obtain the actual content, the contactless transfer of data described herein is complete in and of itself. The content is contained in the interaction between the two devices.

In another exemplary scenario ("user-machine interface"), access and permissions may be communicated between a user and a system. For example, a "generic" (shared) computer may be personalized (configured) for use by a user. A vehicle being shared by various users may be personalized (seat position, speed limits, etc.) by a user.

In the scenarios discussed above - Factory Programming, Warehouse Programming, Point of Sale Programming, Kiosking - it is generally the end product (such as a user's mobile handset) that is being modified (personalized) by the contactless communication (transfer of data). In contrast therewith, in the user-machine interface scenario, it is the system (shared computer, shared car, etc.) that is being modified by the contactless communication (transfer of data). Using contactless communication for digital checkout of an item (such as from a library, or from a rental agency) may broadly be considered to fall into this category of user-modifying system.

In another exemplary scenario ("Sharing Data Between Two Devices"), data may be downloaded from one device to another, such as from a user's digital camera to the user's laptop computer, or from one user's mobile handset to another user's mobile handset. In this "file sharing" scenario, both devices may typically become "modified" as a result of the contactless transaction, in an interactive session between the users of two (or more) devices. In contrast with existing techniques for sharing data between two devices (such as NFC), using the techniques disclosed herein content which is large files (such as movies) may readily be directly transferred between two devices in a very short period of time.

Sometimes the content (data) being transferred may be DRM protected data, and a key may be required to access the content. As mentioned above, content may be stored in a secure (exchange storage) area, may be checked for malicious code, and may accessed from the exchange storage then discarded, or moved to permanent (primary) storage for later (and repeated) access thereto. These are just some examples of how data can be transferred, at various stages in the life of a product (from manufacturer to consumer), and some of the use scenarios that may be implemented using the techniques described herein.

### Dielectric couplers

In the scenarios described above, it is more-or-less presumed that the communication subsystems of the two devices (and their respective antennae, if any) can be brought into close proximity with one another to initiate and sustain the contactless link for transferring data, which may be the case in many, if not most contemplated use scenarios. This may include Factory Programming, Warehouse Programming, or the like, where the product being programmed is "factory sealed" within a (typically cardboard) box. In some other scenarios, close proximity of the communications subsystems (and their respective antennae) may not be feasible. Some of these scenarios will now be described.

To simplify the descriptions of these scenarios (300A, 300B, 300C, collectively referred to as "300"), communication in one direction only may be described, with a first device (302A, 302B, 302C, collectively referred to as "302") having only a transmitter (Tx; 320A, 320B, 320C, collectively referred to as "320"), and a second device (304A, 304B, 304C, collectively referred to as "304") having only a receiver (Rx; 340A, 340B, 340C, collectively referred to as "340"). It should be understood that communication between the devices may occur in both directions (some examples of which have been described hereinabove) and that the devices (302, 304) may each be provided with one or more transceivers (Tx/Rx; 120, 140).

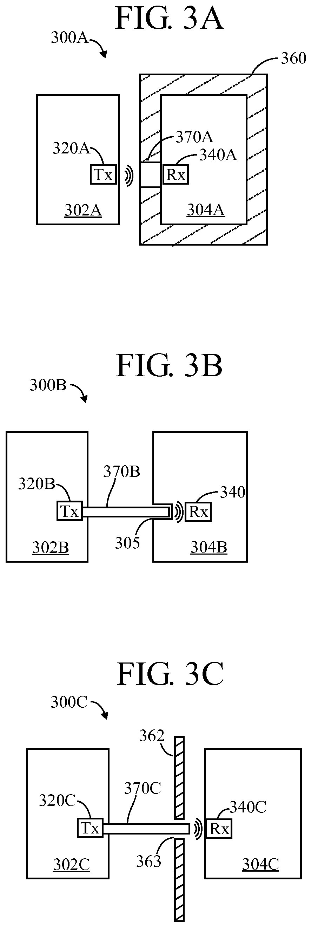

Fig. 3A illustrates a scenario 300A wherein a device 304A which may be considered to be a destination (receiving) device is enclosed in packaging such as a cardboard box 360, and its operative components are disposed at what may be an "excessive" distance from the external surface of the box which is not conducive to establishing the aforementioned EHF contactless link (150) with a device 302A which may be considered to be a source (sending device) which is external to the box 360. This may be due to shock absorbing packing material (shown as dashed cross-hatch lines within the box), and the like, surrounding the device 304A.

In this scenario 300A, it may be necessary or beneficial to transfer data from the device 302A to the device 304A, without opening the box 360. This situation has been described above, such as at the factory, or at a warehouse, or at POS. To facilitate establishing the contactless link (150) for transferring data, a dielectric coupler 370A, such as in the form of a short rod, or plug may be incorporated into or extend through the packing material within the box, establishing a link between the device 304A and an interior surface of the box 360, which remains closed and sealed. In this manner, a left (as viewed) side or end of the coupler 370A can be in close proximity with the transmitter (Tx) 320A of the device 302A, and the right (as viewed) side or end of the coupler 370A may be in close proximity with the receiver (Rx) 340A of the device 304A. The coupler 370A provides means for reducing the effective distance between transmitter (Tx) 320A and the receiver (Rx) 340A to facilitate the contactless link between the two devices. Rather than having a separate and distinct dielectric coupler, it is possible that the packing material itself be manufactured from materials and with properties and structure that allow it to act as the dielectric coupler.

Fig. 3B illustrates a scenario 300B wherein the receiver 340B of the device 304B is disposed at an "excessive" distance from the external surface of the device 304B which is not conducive to establishing the aforementioned EHF contactless link (150) with a device 302A.

In this scenario 300B, it may be necessary or beneficial to transfer data from the device 302B to the device 304B, without opening up the device 304B. This situation may occur, for example, when the device (304) is in a protective container, such as an underwater camera.

To facilitate establishing the contactless link (150) for transferring data, a dielectric coupler 370B, such as in the form of an elongated rod ("probe") extends from the device 302B. The device 304B is provided with a recess 305 in one of its outer surfaces to allow the right (as viewed) end of the coupler to be in close proximity with the receiver (Rx) 340B of the device 304B. The left (as viewed) end of the coupler 370B can be in close proximity with the transmitter (Tx) 320B of the device 302B. The coupler 370B provides means for reducing the effective distance between transmitter (Tx) 320B and the receiver (Rx) 340B to facilitate the contactless link between the two devices.

Fig. 3C illustrates another scenario 300C, wherein there is a barrier 362 between the device 302C and 304B, which may for example be a conductive barrier substantially preventing establishing a contactless link (150) between the two devices 302C and 304C, even if they are sufficiently proximate each other to otherwise set up the contactless link.

In this scenario 300C, it may be necessary or beneficial to transfer data from the device 302C to the device 304C, while overcoming the impediment of the barrier 362. The receiver 340C of the device 304C is near its external surface, but access can only be established through a hole 363 in the barrier 362. This situation may occur, for example, when reading utility meters which are enclosed in a protective barrier or otherwise not readily accessible.

To facilitate establishing the contactless link (150) for transferring data, a dielectric coupler 370C, such as in the form of an elongated rod extends from the device 302C, in a manner which may be similar to the scenario 300B. The left (as viewed) end of the coupler 370C can be in close proximity with the transmitter (Tx) 320C of the device 302C. The right (as viewed) end of the coupler 370C can pass through the hole 363 in the barrier 362 so as to be disposed in close proximity with receiver (Rx) 340C of the device 304C, to facilitate the contactless link between the two devices.

The concept of providing a dielectric coupler to extend the range of the contactless link is described in the aforementioned US 61661756 and US 13760089. Generally, a dielectric coupler for facilitating propagation of EHF-frequency signals may include an elongate strip of dielectric material (medium) such as plastic, glass, rubber or ceramic, and may have a rectangular cross section and two ends. Suitable plastic materials for the dielectric medium may include, but are not limited to, PE (polyethylene), acrylic, PVC (polyvinylchloride), ABS (Acrylonitrile- Butadiene-Styrene), and the like. The dielectric coupler may include dielectric portions made of plastic or other materials having a dielectric constant of at least about 2.0. Materials having higher dielectric constants may result in reduction of required dimensions due to a reduced wavelength of the signal in that material. The dielectric material of the plastic cable that may be at least partially coated in a layer having a low dielectric constant or an electrically conductive layer to facilitate propagation, reduce interference, or to reduce the likelihood of shorting the signal being propagated down a long axis of the coupler. The dielectric medium may function as a transmission medium (such as waveguide), and the EHF carrier may propagate along a long axis of the dielectric medium, maintaining a single polarization direction. An outer surface of the dielectric medium may be coated or covered with a conductive material (metal) which may isolate the dielectric medium from external interference (and, optionally, and may serve as a conductive path for electrical signals and/or power). Stacked or layered structures may enable multiple signal paths.

### Securing the Transmissions

The point-to-point contactless links described herein are inherently secure. Pausing (skipping) transmission of a data stream at periodic intervals, and allowing the destination device to transmit "skip fills" back to the source device during the skipped periods has been described above a "technical" approach to protecting against snooping. In some applications, additional security against snooping may be desirable.

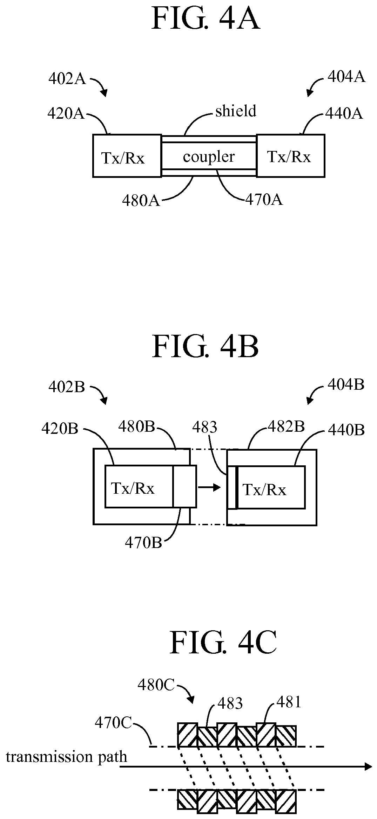

Some examples of means for providing "shielding" of the transmissions (which may be considered to be a "physical" approach) to prevent against snooping will now be described. Generally, a security enclosure, which may comprise dielectric, plastic or other passive materials, may be disposed as a coating or layer, or as a housing around at least a portion of the data paths including the transceivers (Tx/Rx), the contactless link, and dielectric coupler (if any), to protect the data being transferred from being snooped. The contactless link (or transmission path) may include a dielectric coupler. Although the enclosure may be generally transparent to electromagnetic radiation (the EHF signal can get through), signals passing therethrough may become "muddled" by the composition or structure of the enclosure, making any signals received outside the enclosure unintelligible. FIG. 4A illustrates a transceiver (Tx/Rx) 420A of one device 402A communicating over a dielectric coupler 470A with a transceiver (Tx/Rx) 440A of another device 404A. The dielectric coupler 470A may be a plastic material selected for its ability to propagate EHF signals, as discussed above.

In this example, an enclosure 480A comprising a coating (or layer) of material disposed on (covering at least a portion of) the dielectric coupler 470A may be provided. Generally, the material selected for the enclosure 480A may be different from the material selected for the dielectric coupler 470A. The "shielding" material of the enclosure 480A may comprise dielectric, plastic or other passive materials, selected for their properties (or modified) of being able to degrade an EHF signal emanating from the dielectric coupler and passing through the material by any suitable mechanism such as:
- changing the polarization of a signal passing through the enclosure 480A
- superimposing two or more signals within the enclosure together such that an outside observer would observe only the superimposed signal
- modifying the coating to have different composition, different thicknesses, various "imperfections", irregular topography or the like, which will degrade the intelligibility of a signal passing through the enclosure
- a coating of a metallic material may also be used for the housing, or particles of metallic material may be embedded in the housing, but their effect on the desired propagation of the signal from device-to-device should be taken into account.

Fig. 4B illustrates a transceiver (Tx/Rx) 420B of one device 402B communicating over a dielectric coupler 470B with a transceiver (Tx/Rx) 440B of another device 404B. (This example is similar to the examples shown in FIGs. 3B and 3C where probes 370B and 370C are associated with the first device 302B and 302C, respectively.) The dielectric coupler 470B may be a plastic material selected for its ability to propagate EHF signals, as discussed above. In this example, an enclosure 480B comprising a coating (or layer) of material covering at least a portion of the device 402B, such as disposed at least around a portion of the transceiver (Tx/Rx) 420B is shown. Similarly, an enclosure 482B comprising a coating (or layer) of material covering at least a portion of the device 404B, such as disposed at least around a portion of the transceiver (Tx/Rx) 440B is shown. Generally, the material selected for the enclosures 480B and 482B are, as described above, selected for their properties or modified to degrade any signal emanating from the dielectric coupler through the coating.

As illustrated, a recess (or opening) 483 may be provided in the enclosure 482B for accepting a distal end of the dielectric coupler 470B so that it may be in close proximity with the transceiver (Tx/Rx) 440B. (Compare recess 305 and hole 363 in Figs. 3B and 3C, respectively.) The distal end of the dielectric coupler 470B and the recess 483 may be keyed, or the like, to enforce inserting the dielectric coupler 470 in a certain orientation into the recess and/or to provide a releasable snap-fit or the like between the two devices 402B and 404B.

Fig. 4C illustrates in a general manner some options for shielding a transmission path 470C such as an air gap or dielectric coupler. Generally, a housing (or layer, or coating) 480C may be disposed around at least a portion of, including substantially all of the transmission path, to degrade any signal passing therethrough. The housing 480C is illustrated as comprising at least two different materials 481 and 483, having different sections with different thicknesses, an irregular topography on at least one of the inner or outer surfaces thereof, may comprise spiral wound bands of material (as indicated by the diagonal dashed lines), and the like, including any material or structural property which may degrade an EHF signal passing therethrough. Generally, inside the enclosure(s) described herein, the EHF signals generated by and passing between the transceivers (Tx/Rx) may be distinct, polarized, and distinguishable from one another. Outside the enclosure(s), the signals may be blended together, shifted in phase, altered in polarization, or the like, so that although a (snooping) device outside the enclosure may detect that there is a signal, the signal would be so degraded or blended together that it would be indecipherable. This "physical" approach to protecting against snooping, in addition with "technical" approaches such as skip fills (described above), spread spectrum clocking (SSC), encryption/decryption and the like, may provide enhanced security for data being transferred between two devices.

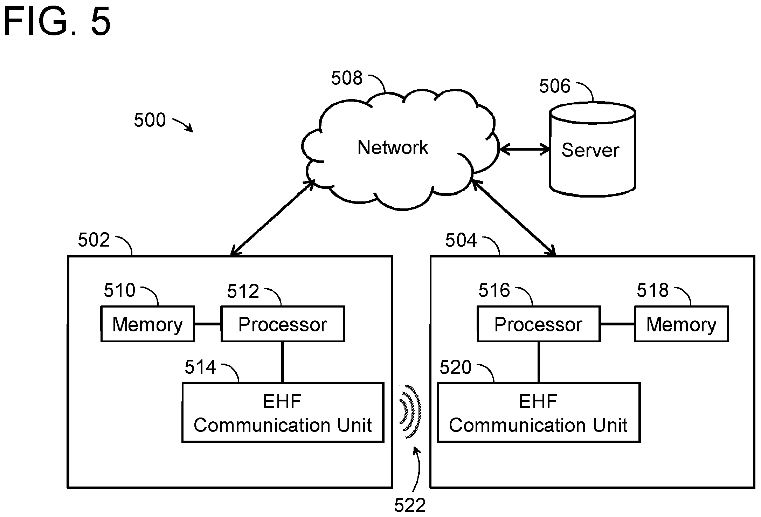

Fig. 5 is a block diagram depicting a system 500, according to aspects of the present disclosure. System 500 may be described as a system for ad-hoc file transmission, a system for synchronizing a digital media file via short-range EHF communication, and/or a tap-sell system.

System 500 may include a first electronic device 502, a second electronic device 504, and a server 506. First electronic device 502 and second electronic device 504 may be portable and/or wireless electronic devices. For example, each of first and second electronic devices may be independently a cellular phone (e.g., smartphone), a laptop computer, a tablet, an e-book reader, or a portable music player. In some embodiments, at least one of first and second electronic devices 502 and 504 may be configured to communicate wirelessly with a networked server (e.g., server 506). For example, both first and second electronic devices may be configured to communicate (e.g., wirelessly) with server 506 via network 508 (e.g., a cloud network).

First electronic device 502 may include a first memory or memory unit 510, a first processor 512, and a first Extremely High Frequency (EHF) communication unit 514. First memory 510 may include at least one file. For example, first memory 510 may store one or more digital media files. First processor 512 may be coupled (e.g., operationally coupled) to first memory 510, and first EHF communication unit 514 may be coupled (e.g., operationally coupled) to first processor 512.

First EHF communication unit 514, as well as other EHF communication units described herein, may include a transducer and an integrated circuit including at least one of a transmitter circuit and a receiver circuit that is operatively connected to the transducer. The transducer may be configured to transmit and/or receive an EHF electromagnetic signal and to convert between electrical signals and electromagnetic signals.

Second electronic device 504 may include a second memory or memory unit 516, a second processor 518, and a second EHF communication unit 520. Second processor 516 may be coupled (e.g., operationally coupled) to second memory 518, and second EHF communication unit 520 may be coupled (e.g., operationally coupled) to second processor 520.

Each of the first and second electronic devices 502 and 504 may include a transceiver configured to asynchronously convert between baseband signals and modulated EHF signals. For example, first EHF communication unit 514 may include a transceiver similar to transceiver 120 (see Figs. 1A-1C), and second EHF communication unit 520 may include a transceiver similar to transceiver 140 (see Figs. 1A-1C). Each of the transceivers may be a half-duplex transceiver which can asynchronously convert a baseband signal into a modulated EHF carrier, and/or can receive and demodulate the carrier.

In some embodiments, first and second processors 512 and 516 may be configured to establish EHF communication link 522 between first and second EHF communication units 514 and 520, and transmit a copy of the at least one file of first memory 510 to second memory 516 via EHF communication link 522.

The at least one file may be a digital media file. The at least one file may include digital rights management (DRM), and first and second processors 512 and 516 may be configured to transmit the copy of the at least one file while preserving the DRM.

To transmit the at least one file from first electronic device 502 to second electronic device 504, a list of files stored on memory 510 may be displayed on first device 502 (e.g., on a graphical user interface of first device 502). A first user (or owner) of first device 502, and/or a second user (or owner) of second device 504 may identify a file that the first user and/or the second user desires to transmit to (or receive at) second electronic device 504. Processor 512 may be configured to transmit the identified file (e.g., the copy of the at least one file) to second device 504 via EHF communication link 522.

In some embodiments, the list may be displayed on the second device. The list may be transmitted to second device 504 via EHF communication link 522, and may be displayed on a graphical user interface of second device 504. The second user may identify the at least one file that the second user desires to receive at the second electronic device. Second processor 516 may be configured to transmit an indication of the at least one file to first device 502 via EHF communication link 522.

In some embodiments, second device 504 may transmit a list (or wish list) of one or more requested files to first device 502 (e.g., via EHF communication link 522). The one or more requested files may be files that second device 504 is looking for (e.g., files that the user of second device 504 wishes to obtain). First device 502 may match (or compare) the list of the one or more requested files against (or to) available files locally stored on first device 502 (e.g., in memory 510), and/or files that first device 502 can access via network 508. First device 502 may transmit one or more files (e.g., one or more selected files) from the wish list to second device 504 (e.g., if second device 504 is authorized to receive the one or more files).

In some embodiments, one or more files associated with one or both of first and second devices 502 and 504 may have fragments that are missing, and the missing file fragments may be selected (e.g., via one or more lists) for transmission between first and second device 502 and 504.

Some embodiments may be user-directed. For example, the second user (of second device 504) may author a wish list (e.g., movies that the second user desires to watch, albums that the second user desires to buy, etc.). The wish list may be transmitted from second device 504 to first device 502 (e.g., via EHF communication link 522, and/or network 508). First device 502 may match (or compare) a local database (e.g., of files) against the wish list, and first device 502 may transmit one or more files corresponding to one or more files of the wish list to second device 504.

Some embodiments may be automatic. For example, the second user may be watching a season of TV episodes (or accessing another media series). The second user may have finished watching a first subset of episodes of the season (e.g., the first five episodes of the season). All or a portion of the first subset may have been watched by the second user on second device 504 (or on an additional device that directly or indirectly indicates to second device 504 what episodes the second user has watched). Second device 504 may be positioned in proximity to first device 502 (e.g., second device 504 may be a second phone, first device 502 may be a first phone or a kiosk, such as a digital video recorder, and the second phone may be set onto the first phone or the kiosk) to form EHF communication link 522. First device 502 may transmit a second subset of episodes of the season (e.g., the next five episodes) to second device 504 (e.g., by comparing a list of already watched episodes to a list of episodes available on or through first device 502) via EHF communication link 522, or may transmit another series that the second user may like to watch.

First and second EHF communication units 514 and 520 may be configured to form EHF communication link 522 when first and second EHF communication units 514 and 520 are disposed in a relatively close (and/or preselected) proximity to one another, and/or a relative (and/or preselected) orientation. For example, first and second EHF communication units 514 and 520 may be configured to form EHF communication link 522 when edges (or sides, such as major surfaces of the respective devices) of first and second electronic device 502 and 504 are brought into contact with one another (tapped together).

After receiving the identification (e.g., via the graphical user interface of first electronic device 502, and/or via EHF communication link 522), the first electronic device may format a data package that includes the identified file (or a copy thereof). First processor 512 may be configured to transmit the data package to second device 504 via EHF communication link 522. Second processor 516 may be configured to extract the identified file (e.g., the copy of the at least one file) from the data package, and to store the identified file in second memory 518.

At least one of first and second electronic devices 502 and 504 may be configured to generate a record of the transmission of the copy of the at least one file (i.e., file copy), and transmit the generated record to server 506.

The generated record may include identifications of the first and second electronic devices, which may or may not be associated with one or more users of the first and second electronic devices. For example, the identifications may include a first identification of first electronic device 502, and a second identification of second electronic device 504. The first identification may be associated with an online account and/or telecommunication account associated with first electronic device 502 or a user thereof (e.g., the online account may be maintained by an entity holding a copyright of the at least one file, and/or an entity providing network services). The second identification may be associated with an online account and/or telecommunication account associated with second electronic device 504 or a user thereof.

Second electronic device 504 may be configured to register a purchase of the transmitted file copy with the networked server. The networked server may communicate to the entity holding (or licensing) the copyright that the second user (or owner) of second electronic device 504 has purchased the file from the first user (or owner) of first electronic device 502.

First electronic device 502 may be configured to register a sale of the transmitted file copy to the networked server. The networked server may communicate to the entity holding (or licensing) the copyright that the first user (or owner) of first electronic device 502 has sold the file to the second user (or owner) of second electronic device 504.

System 500 may associate a value with the file. The value (e.g., a monetary amount) may be debited from a second account associated with the second user (e.g., an account associated with the second identification). In some embodiments, the value may be credited to the entity holding (or licensing) the copyright. In other embodiments, the value may be credited to a first account associated with the first user (e.g., an account associated with the first identification). In yet other embodiments, a first portion of the value may be credited to the entity, and a second portion of the value may be credited to the first account. In some embodiments, the value or a portion thereof may be credited to the first account after the identified file has been deleted from first electronic device 502 (e.g., by the first user and/or first processor 512). In some embodiments, the value or a portion thereof may not be credited to the first account if the identified file is not deleted from first electronic device 502.

System 500 may be configured to prevent piracy. For example, embodiments of a file transaction described herein may be carried out in accordance with the DRM associated with the transmitted file. First device 502 and/or second devices 504 in communication with network 508 may ensure that a content provider (e.g., an owner of the file) is paid for their work.

In some embodiments, the file being transferred may be pre-purchased with a for-resale license. The file may be transferred from first device 502 to second device 504. The transferred file may remain locked until the recipient (e.g., the second user) uses an unlock code or credit. For example, a WAN transaction may unlock the transmitted file, and/or the user may purchase (e.g., pre-purchase) credits for offline payment.

In some embodiments, the second user may indicate to the first user that the second user wants to purchase one or more files (i.e., content) that may be accessible to first device 502 (e.g., stored locally on first device 502, and/or accessible to first device 502 from the cloud network). First device 502 may transfer to second device 504 file information (e.g., a link, such as a hyperlink) for the indicated (or identified) one or more files to allow the second user to purchase the content (e.g., a specific item of content) from an online store of an owner of the content. The link may obviate a need for the second user to write down a name or other identification of the content (e.g., a song, video, or other type of content), or a website address for the online store. The link may obviate a need for the second user to search online for the content. The link may notify the owner of the content of a contract between the second user and the first user, the first user and the owner, and/or the second user and the owner.In some embodiments, the first user may be credited by the owner of the content as an incentive to continue to act as a sales channel (e.g., a mini sales channel) for the content. For example, the owner may provide financial incentives (e.g., a portion of proceeds from the second user's purchase), free content (e.g., free downloads from the online store), discounts on content purchases, and/or other incentives.

In some embodiments, first EHF communication unit 514 may be configured to establish an EHF communication link 522 with second EHF communication unit 520, and first processor 512 may be configured to transmit a selected digital media file of the one or more digital media files from first memory unit 510 to second EHF communication unit 520 via EHF communication link 522. Second processor 516 may be configured to receive the selected digital media file from first electronic device 502. Second processor 516 may be configured to store the selected digital media file in the second memory unit.

The one or more digital media files may be selected from personal media files and commercial media files. The commercial media files may be selected from audio files, image files, and video files.

First processor 512 may be configured to record the transmission of the selected media file at the networked server.

In some embodiments, first electronic device 502 (e.g., a kiosk) may produce a list of one or more files stored in a cloud network (e.g., such as network 508 and/or server 506). Second electronic device 504 (e.g., a tablet) may identify a file from the list of one or more files stored in the cloud network that the user of second electronic device 504 may want. For example, the identified file may be a file that the second user desires to obtain. First electronic device 502 may obtain (e.g., download) the identified file from the cloud network. First electronic device 502 may transfer the obtained identified file to second electronic device 504 via EHF communication link 522.

In some embodiments, first electronic device 502 may produce a list of one or more files stored in the cloud network and one or more files stored on first electronic device 502.

The one or more files stored in the cloud network and/or stored on the first electronic device 502 may be current hit songs, recent movie releases, and/or content that is particularly relevant to a particular event or geographical location. For example, one or more second electronic devices 504 (e.g., one or more mobile devices) may be in a vicinity of a particular first electronic device location (e.g., a kiosk location, such as a location of a kiosk at an airport). The one or more second electronic devices may request content (e.g., via one or more lists of one or more files) that may be made available to the one or more second electronic devices (e.g., via one or more EHF communication links) at the first electronic device (e.g., the kiosk in the airport). The content (e.g., the one or more files) may be associated with the location of the first electronic device. For example, the content may include a tour video for the location, and/or a playlist of songs performed by local bands.

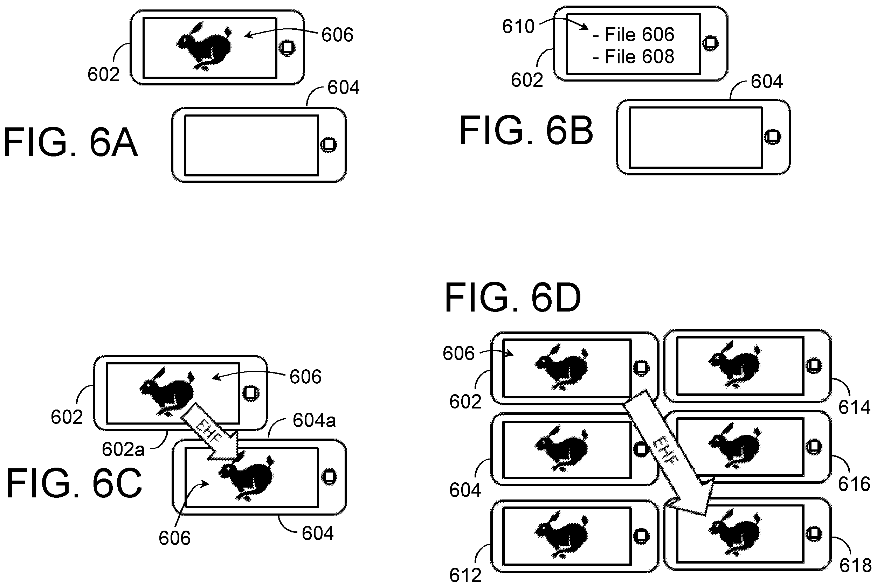

Fig. 6A shows a first smartphone 602 and a second smartphone 604. First and second smartphones 602 and 604 may be embodiments of first and second electronic devices 502 and 504 of system 500 (see Fig. 5). For example, each of the smartphones may include an EHF communication unit, a processor, and a memory unit.

First smartphone 602 may include a file, such a digital media file, which is generally indicated at 606, shown here as an image of a running rabbit. The file may be stored in a memory unit of first smartphone 602, and may be viewable on a graphical user interface (GUI) of smartphone 602, as shown.

As shown in Fig. 6B, at least one of first and second smartphones 602 and 604 may be configured to produce a list, generally indicated at 610, of files stored on first smartphone 602 that are available to share with other devices. For example, a file 608 may also be stored on first smartphone 602, files 606 and 608 may be available to share with other devices, and list 610 may include a visual indication of files 606 and 608, as shown. Availability to share may be determined by a license agreement associated with a corresponding file.

In Fig. 6B, list 610 is displayed on first smartphone 602. In other embodiments, list 610 may be displayed on second smartphone 604, or on both smartphones.

In some embodiments, list 610 may be produced and/or displayed prior to formation of an EHF communication link between respective EHF communication units of smartphones 602 and 604. In other embodiments, list 610 may be displayed after formation of the EHF communication link.

In some embodiments, formation of the EHF communication link may initiate the production and/or display of list 610. A second identification associated with a user of second smartphone 604 may be transferred to first smartphone 602 via the EHF communication link. First smartphone 602 may be configured to determine whether the second identification is associated with a user (or device) with which files stored on first smartphone 602 may be shared and/or to which files stored on first smartphone 602 may be sold.

The first user (e.g., of first smartphone 602), the second user (e.g., of second smartphone 604), or the first and second users together may indicate which file from list 610 is to be transferred, transmitted, and/or sold to second smartphone 604. For example, one of the users may select one of the files from list 610 to produce an identification of the selected file. The processor of first smartphone 602 may be configured to receive the identification of the selected file, and to initiate a transmission of the selected file via the EHF communication link, for example, by directing the users of the smartphones to bring to position the EHF communication of the corresponding smartphones in proximity to one another.

As shown in Fig. 6C, to transfer, transmit, and/or sell file 606 (or a copy thereof) from first smartphone 602 to second smartphone 604, the first and second smartphones may be moved toward one another. Moving the smartphones toward one another may position the EHF communication units of the smartphones in a relatively close proximity and/or orientation to form EHF communication link. In some embodiments, moving the smartphones (or other embodiments of first and second electronic devices) toward one another may involve tapping (or touching) together first smartphone 602 and second smartphone 604. For example, the respective EHF communication units of smartphones 602 and 604 may be configured to establish an EHF communication link between smartphones 602 and 604 when respective edges 602a and 604a are disposed in a relatively close proximity to one another (e.g., when edge 602a contacts or taps edge 604a). One or both of smartphones 602 and 604 may include a dielectric waveguide configured to propagate an EHF electromagnetic signal between the respective EHF communication units of smartphones 602 and 604.

As shown in Fig. 6C, transmission of file 606 (e.g., in a data package) from first smartphone 602 to second smartphone 604 may be configured to generate a tiled display on first and second smartphones 602 and 604 corresponding to file 606.

Fig. 6D shows an embodiment in which first smartphone 602 transmits file 606 to second smartphone 604, and one or more additional electronic devices, shown here as a third smartphone 612, a fourth smartphone 614, a fifth smartphone 616, and a sixth smartphone 618. For example, each of the smartphones may include one or more EHF communication units, a processor, and a memory. One or more EHF communication links may be formed between the EHF communication unit of smartphone 602 and the other smartphones. In some embodiments, smartphone 602 may be configured to form one or more EHF communication links with the smartphones that are positioned directly adjacent to smartphone 602 (e.g., smartphones 604 and 614). Smartphone 602 may be configured to transmit file 606 to smartphone 612, 616, and 618 via one or more EHF communication links formed between any suitable combination of smartphones. For example, smartphone 618 may receive file 606 directly from smartphone 602 (via an EHF communication link) or via an EHF communication link formed between smartphone 602 and smartphone 614, an EHF communication link formed between smartphone 614 and smartphone 616, and an EHF communication link formed between smartphone 616 and smartphone 618.

Before transmission of the file, a list, such as list 610 (see Fig. 6B) may be displayed on one or more (or all) of smartphones 602, 604, 612, 614, 616, 618, and one or more users of those smartphones may select the desired file, such as file 606. In other embodiments, the list may be displayed on a subset of the smartphones. For example, the list may only be displayed on smartphone 602, or may only be displayed on smartphones 604, 612, 614, 616, and 618.

As shown, transmission of file 606 from smartphone 602 to smartphones 604, 612, 614, 616, and 618 generates a tiled display on smartphones 602, 604, 612, 614, 616, and 618 corresponding to file 606.

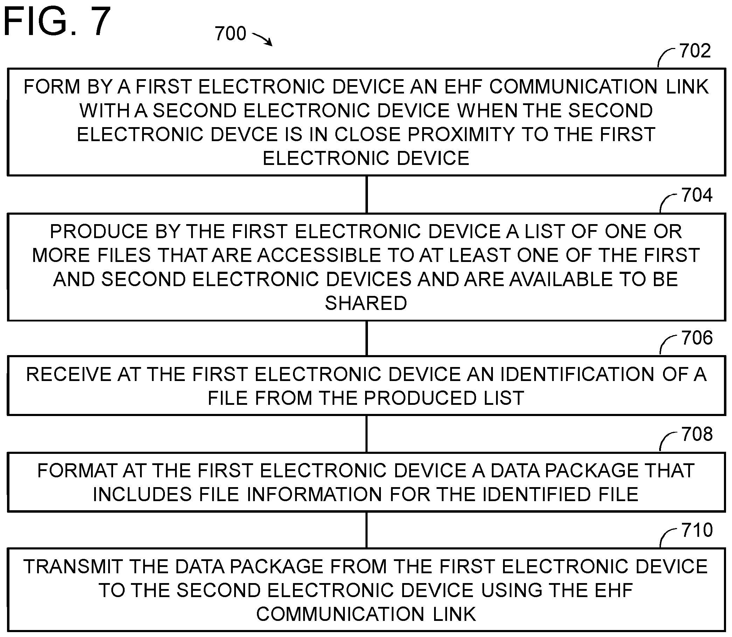

Fig. 7 depicts a method 700 for transmitting one or more files to a second electronic device. In some embodiments, the one or more files may be transmitted from a first electronic device to the second electronic device.

The first electronic device may be a portable wireless device, such as a cellular phone, a laptop, a tablet, an e-book reader, or a portable music player (e.g., an MP3 player). Each of the first and second electronic devices may independently be a cellular phone, a laptop, a tablet, an e-book reader, or a portable music player. For example, in some embodiments the first electronics device may be a first cellular phone, and the second electronics device may be a second cellular phone. In other embodiments, the first electronics device may be a tablet, and the second electronics device may be an e-book reader.

In some embodiments, the first electronic device may be a non-portable device, such as a kiosk.

Method 700 may include a step 702 of forming by the first electronic device an EHF communication link with the second electronic device. For example, the first electronic device may include a first EHF communication unit, the second electronic device may include a second EHF communication unit, and one or more users (or owners) of the first and second electronic devices may move the first and second electronic devices into relative proximity to one another to form the EHF communication link between the first and second EHF communication units. Each of the first and second electronic devices (e.g., the EHF communication units of the first and second electronic devices) may include a transceiver configured to asynchronously convert between baseband signals and modulated EHF signals.

Method 700 may include a step 704 of producing, by the first electronic device, a list of one or more files that are accessible to at least one of the first and second electronic devices and are available to be shared (e.g., from the first electronic device to the second electronic device, and/or from a remote server on a network to the second electronic device. In some embodiments, the one or more files may be stored on the remote server. In other embodiments, the one or more files may be stored on the first electronic device. In other embodiments, a portion of the one or more files may be stored on the remote server and a portion of the one or more files may be stored on the first electronic device.

Method 700 may include a step 706 of receiving, at the first electronic device, an identification of a file from the list produced in step 704 (i.e., the produced list).

In some embodiments, method 700 may further comprise a step of receiving at the first electronic device the identified file from the remote server over a network.

Method 700 may include a step 708 of formatting, at the first electronic device, a data package that includes file information for the file identified in step 706 (i.e., the identified file). The file information may be a link to a remote server on a network where the identified file is stored. In some embodiments, the file information may be the identified file.

In some embodiments, formatting the data package may include formatting a data package that includes one or more digital media files (e.g., the identified file may be a digital media file and the data package may include additional digital media files). The one or more digital media files may include DRM.

Method 700 may include a step 710 of transmitting the data package from the first electronic device to the second electronic device using the EHF communication link.

Method 700 may further comprise a step of generating a record of the transmission of the file from the first electronic device to the second electronic device.

In some embodiments, the record may be generated by the first electronic device, by the second electronic device, and/or by data from the first electronic device and by data from the second electronic device.

In some embodiments, generating the record may include identifying a user of the second electronic device.

Method 700 may further comprise a step of transmitting the generated record to a networked server.

Method 700 may further comprise a step of deleting the identified file from the first electronic device, for example, after transmitting the data package to the second electronic device.

Method 700 may further comprise associating a value with the transmission of the file. The associated value may be charged to the user of the second device. The associated value may be credited to the user of the first electronic device.

Method 700 may further comprise transmitting the data package from the first electronics device to one or more additional electronics devices via (or using) one or more additional EHF communication links. Transmitting the data package to the one or more additional electronics devices may include generating a tiled display on the first, second, and one or more electronics devices corresponding to the transmitted identified file.

Method 700 may further comprise receiving by the first user (of the first electronic device) an incentive associated with the transmission of the file information (e.g., the link). The incentive may be a credit associated with a value of the transmission of the file information, or other incentive, such as a discounted or free download of a digital media file.

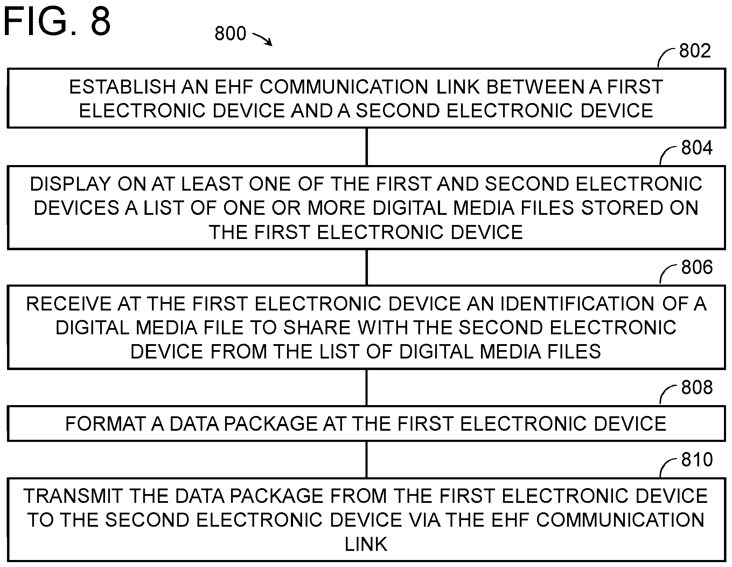

Fig. 8 depicts a method 800 of synchronizing a digital media file from a first electronic device to a second electronic device.

Method 800 may include a step 802 of establishing an EHF communication link between the first electronic device and the second electronic device.

Method 800 may include a step 804 of displaying, on at least one of the first and second devices, a list of one or more digital media files stored on the first electronic device.

Method 800 may include a step 806 of receiving, at the first electronic device, an identification of a digital media file to share with the second electronic device from the list of digital media files.

Method 800 may include a step 808 of formatting a data package at the first electronic device. The data package may be formatted for transmission over the EHF communication link, and the data package may include a copy of the identified digital media file.

Method 800 may include a step 810 of transmitting the data package from the first electronic device to the second electronic device via the EHF communication link. Step 810 may include transmitting an audio file, an image file, or a video file.

Method 800 may further comprise a step of receiving, at the first electronic device, a confirmation from the second electronic device that the copy of the digital media file transmitted successfully.

Method 800 may further comprise a step of generating a record of the transmission of the copy of the identified digital media file.

Method 800 may further comprise transmitting the record from at least one of the first electronic device and the second electronic device to a networked server. Transmitting the record to the networked server may include registering a purchase of the identified digital media file by an owner of the second electronic device. Transmitting the record may include recording a sale of the identified digital media file to a user of the second device.

It is believed that the disclosure set forth herein encompasses multiple distinct inventions with independent utility. While each of these inventions has been disclosed in its preferred form, the specific embodiments thereof as disclosed and illustrated herein are not to be considered in a limiting sense as numerous variations are possible. Each example defines an embodiment disclosed in the foregoing disclosure, but any one example does not necessarily encompass all features or combinations that may be eventually claimed. Where the description recites "a" or "a first" element or the equivalent thereof, such description includes one or more such elements, neither requiring nor excluding two or more such elements. Further, ordinal indicators, such as first, second or third, for identified elements are used to distinguish between the elements, and do not indicate a required or limited number of such elements, and do not indicate a particular position or order of such elements unless otherwise specifically stated.

## Claims

1. A method comprising:
in a first electronic device (104) having:
a host system (126), the host system including:
a processor (132), and
primary storage (134); and
a communication subsystem (128) in communication with the host system over a signal line (130), the communication subsystem including:
a transceiver (140) configured to communicate with a second electronic device (102) over an extremely high frequency (EHF) communication link (150; 522),
exchange storage (138), and
a communication subsystem microcontroller (136) configured to control operation of the transceiver and the exchange storage;
while the processor of the host system is off or in a low power mode:
forming the EHF communication link between the communication subsystem and the second electronic device when the second electronic device is in close proximity to the first electronic device;
receiving, at the communication subsystem of the first electronic device, a data file from the second electronic device via the EHF communication link; and
storing the data file in the exchange storage of the communication subsystem, the data file in the exchange storage being firewalled from the primary storage of the host system such that the data file can be moved from the exchange storage to the primary storage only after the data file has been validated by the communication subsystem microcontroller; and
when the processor of the host system is turned on or powered up and the communication subsystem microcontroller has validated the data file, transferring the data file from the exchange storage of the communication subsystem over the signal line between the communication subsystem and the host system to the primary storage of the host system.

2. The method of claim 1, wherein the first electronic device is a portable wireless device.

3. The method of claim 1, wherein the second electronic device is a non-portable device.

4. The method of claim 3, wherein the non-portable device is a kiosk.

5. The method of claim 1, wherein the EHF communication link is established via a dielectric coupler (370B, 370C, 470A, 470B) located between an antennae of the first electronic device and an antennae of the second electronic device, and the data file is received via the EHF communication link from the second electronic device across the dielectric coupler.

6. The method of claim 1, wherein the first electronic device is in a cardboard box (360) when establishing the EHF communication link, wherein the first electronic device is in the cardboard box when receiving the data file via the EHF communication link.

7. The method of claim 1, further comprising:
transmitting an encryption code from the first electronic device to the second electronic device during a pause in transmission of the data file, wherein the encryption code is used to scramble a remaining portion of the data file being transmitted.

8. The method of claim 1, wherein the communication subsystem is configured to transmit at least one of random signals, decryption codes or other data to the second electronic device while the transceiver receives the data file from the second electronic device.

9. The method of claim 1, wherein the data file received by transceiver-corresponds to an operating system (OS) or firmware for the first electronic device.

## Patentansprüche

1. Verfahren, umfassend:
in einer ersten elektronischen Vorrichtung (104) mit:
einem Hostsystem (126), wobei das Hostsystem umfasst
einen Prozessor (132), und
einen Primärspeicher (134); und
einem Kommunikationssubsystem (128), welches mit dem Hostsystem über eine Signalleitung (130) in Verbindung steht, wobei das Kommunikationssubsystem umfasst:
eine Sende-/Empfangseinrichtung (140), welche dazu eingerichtet ist, mit einer zweiten elektronischen Vorrichtung (102) über eine Kommunikationsverbindung (150; 522) sehr hoher Frequenz (EHF) zu kommunizieren,
einen Austausch-Speicher (138), und
einen Kommunikationssubsystem-Mikrokontroller (136), welcher dazu eingerichtet ist, einen Betrieb der Sende-/Empfangseinrichtung und des Austauschspeichers zu steuern;
während der Prozesse des Hostsystems ausgeschaltet ist oder sich in einem Energiesparmodus befindet:
Ausbilden der EHF-Kommunikationsverbindung zwischen dem Kommunikationssubsystem und der zweiten elektronischen Vorrichtung, wenn sich die zweite elektronische Vorrichtung in unmittelbarer Nähe der ersten elektronischen Vorrichtung befindet;
Empfangen, an dem Kommunikationssubsystem der ersten elektronischen Vorrichtung, einer Datei von der zweiten elektronischen Vorrichtung über die EHF-Kommunikationsverbindung; und
Speichern der Datei in dem Austauschspeicher des Kommunikationssubsystems, wobei die Datei in dem Austauschspeicher derart durch eine Firewall von dem Primärspeicher des Hostsystems geschützt ist, dass die Datei erst von dem Austauschspeicher in den Primärspeicher bewegt werden kann, nachdem die Datei durch den Kommunikationssubsystem-Mikrocontroller validiert worden ist; und
wenn der Prozessor des Hostsystems eingeschaltet oder hochgefahren ist und der Kommunikationssubsystem-Mikrocontroller die Datei validiert hat, Transferieren der Datei von dem Austauschspeicher des Kommunikationssubsystems über die Signalleitung zwischen dem Kommunikationssubsystem und dem Hostsystem zu dem Primärspeicher des Hostsystems.

2. Verfahren nach Anspruch 1, wobei die erste elektronische Vorrichtung eine tragbare drahtlose Vorrichtung ist.

3. Verfahren nach Anspruch 1, wobei die zweite elektronische Vorrichtung eine nicht-tragbare Vorrichtung ist.

4. Verfahren nach Anspruch 3, wobei die nicht-tragbare Vorrichtung ein Kiosk ist.

5. Verfahren nach Anspruch 1, wobei die EHF-Kommunikationsverbindung über eine dielektrische Kopplungseinrichtung (370B, 370C, 470A, 470B) hergestellt wird, welche zwischen einer Antenne der ersten elektronischen Vorrichtung und einer Antenne der zweiten elektronischen Vorrichtung angeordnet ist, und die Datei über die EHF-Kommunikationsverbindung von der zweiten elektronischen Vorrichtung über die dielektrische Kopplungseinrichtung empfangen wird.

6. Verfahren nach Anspruch 1, wobei sich die erste elektronische Vorrichtung in einem Karton (63) befindet, wenn die EHF-Kommunikationsverbindung hergestellt wird, wobei sich die erste elektronische Vorrichtung in dem Karton befindet, wenn die Datei über die EHF-Kommunikationsverbindung empfangen wird.

7. Verfahren nach Anspruch 1, ferner umfassend:
Übertragen eines Verschlüsselungscodes von der ersten elektronischen Vorrichtung zu der zweiten elektronischen Vorrichtung während einer Übertragungspause der Datei, wobei der Verschlüsselungscode verwendet wird, um einen verbleibenden Abschnitt der Datei, welche übertragen wird, zu chiffrieren.

8. Verfahren nach Anspruch 1, wobei das Kommunikationssubsystem dazu eingerichtet ist wenigstens eines aus Zufallssignalen, Verschlüsselungscodes oder anderen Daten an die zweite elektronische Vorrichtung zu übertragen, während die Sende-/Empfangseinrichtung die Datei von der zweiten elektronischen Vorrichtung empfängt.

9. Verfahren nach Anspruch 1, wobei die Datei, welche durch die Sende-/Empfangseinrichtung empfangen wird, einem Betriebssystem (OS) oder einer Firmware der ersten elektronischen Vorrichtung entspricht.

## Revendications

1. Procédé comprenant :
dans un premier dispositif électronique (104) ayant :
un système hôte (126), le système hôte comportant :
un processeur (132), et
une mémoire principale (134) ; et
un sous-système de communication (128) en communication avec le système hôte sur une ligne de signal (130), le sous-système de communication comportant :
un émetteur-récepteur (140) configuré pour communiquer avec un deuxième dispositif électronique (102) sur une liaison de communication (150 ; 522) à très haute fréquence (EHF),
une mémoire d'échange (138), et
un microcontrôleur de sous-système de communication (136) configuré pour commander le fonctionnement de l'émetteur-récepteur et de la mémoire d'échange ;
tandis que le processeur du système hôte est éteint ou en mode basse puissance, les étapes consistant à :
former la liaison de communication EHF entre le sous-système de communication et le deuxième dispositif électronique lorsque le deuxième dispositif électronique est à proximité immédiate du premier dispositif électronique ;
recevoir, au niveau du sous-système de communication du premier dispositif électronique, un fichier de données à partir du deuxième dispositif électronique via la liaison de communication EHF ; et
stocker le fichier de données dans la mémoire d'échange du sous-système de communication, le fichier de données dans la mémoire d'échange étant protégé par un pare-feu de la mémoire principale du système hôte, de sorte que le fichier de données ne puisse être déplacé de la mémoire d'échange à la mémoire principale qu'après que le fichier de données a été validé par le microcontrôleur de sous-système de communication ; et
lorsque le processeur du système hôte est allumé ou mis sous tension et que le microcontrôleur de sous-système de communication a validé le fichier de données, transférer le fichier de données de la mémoire d'échange du sous-système de communication sur la ligne de signal entre le sous-système de communication et le système hôte à la mémoire principale du système hôte.

2. Procédé de la revendication 1, dans lequel le premier dispositif électronique est un dispositif sans fil portable.

3. Procédé de la revendication 1, dans lequel le deuxième dispositif électronique est un dispositif non portable.

4. Procédé de la revendication 3, dans lequel le dispositif non portable est un kiosque.

5. Procédé de la revendication 1, dans lequel la liaison de communication EHF est établie via un coupleur diélectrique (370B, 370C, 470A, 470B) situé entre une antenne du premier dispositif électronique et une antenne du deuxième dispositif électronique, et le fichier de données est reçu via la liaison de communication EHF du deuxième dispositif électronique à travers le coupleur diélectrique.

6. Procédé de la revendication 1, dans lequel le premier dispositif électronique se trouve dans une boîte en carton (360) lors de l'établissement de la liaison de communication EHF, dans lequel le premier dispositif électronique se trouve dans la boîte en carton lors de la réception du fichier de données via la liaison de communication EHF.

7. Procédé de la revendication 1, comprenant en outre l'étape consistant à :
transmettre un code de chiffrement du premier dispositif électronique au deuxième dispositif électronique pendant une pause de transmission du fichier de données, où le code de chiffrement est utilisé pour brouiller une partie restante du fichier de données en cours de transmission.

8. Procédé de la revendication 1, dans lequel le sous-système de communication est configuré pour transmettre au moins des signaux aléatoires, des codes de déchiffrement ou d'autres données au deuxième dispositif électronique tandis que l'émetteur-récepteur reçoit le fichier de données à partir du deuxième dispositif électronique.

9. Procédé de la revendication 1, dans lequel le fichier de données reçu par l'émetteur-récepteur correspond à un système d'exploitation (OS) ou à un micrologiciel pour le premier dispositif électronique.
